# EUROPEAN PATENT APPLICATION

(11) **EP 1 109 156 A2**
(43) Date of publication of application: **20.06.2001**
(21) Application number: 00403373.4
(22) Date of filing: 01.12.2000
(51) Int. Cl.: G11B 5/60

(54) **Data storage system having a media-stabilizing member**

(30) Priority: 14.12.1999 US 460607
(71) Applicant: IOMEGA CORPORATION, Roy, UT 84067 (US)
(72) Inventor: Hall, David L., Salt Lake City, Utah 84115 (US)
(74) Representative: Cabinet Hirsch

(57) **Abstract**

A data-storage system for use with a flexible data-storage medium (12) includes a stabilizing member (40a, 40b, 40c). The system also comprises a data-transducing head (13) coupled to an air-hearing slider (14). The data-transducing head and the air-bearing slider arc positioned proximate a data-storage surface (12a) of the medium. The stabilizing member is positioned adjacent an opposing second surface (12b) of the data-storage medium. The data-transducing head (13) and the stabilizing member (40a, 40b, 40c, 40d) are aligned so that a portion of the data-storage medium (12) is sandwiched between the head and the stabilizing member. The data-storage medium is rotated during data-transducing operations. The stabilizing member interacts with an aerodynamic boundary layer that forms on the second surface of the data-storage medium as a result of the medium's rotational movement. This interaction stabilizes the portion of the data-storage medium disposed between the stabilizing member and the data-transducing head, and thereby allows the data-transducing head to fly above the data-storage surface without substantially contacting the data-storage surface.

## Description

### Field of the Invention

The present invention relates to media-stabilizing members for use in data-storage systems. More specifically, the invention pertains to a stabilizing member that facilitates the use of a flying head in conjunction with a flexible data-storage medium.

### Background of the Invention

Digital information is commonly stored on rotatable data-storage media. Rotatable data-storage media are typically used in conjunction with a disk drive that is adapted to rotate the media. Disk drives commonly include a data-transducing head that writes or reads information to and from the surface of the medium as the medium rotates. More particularly, the head writes or reads information to and from a series of continuous tracks positioned around the medium's axis of rotation.

Data-storage media may be magnetic-type media. Magnetic media are formed from a magnetically-sensitive material. Data-transducing heads that are used in conjunction with magnetic media, e.g., magnetoresistive heads, emit a magnetic field over a portion of the medium. The magnetic field reorients the magnetic particles disposed on or near the surface of the medium. More particularly, the magnetization of the individual particles is oriented in a manner that forms a binary code representing bits of digital data. The magnetization of the particles can subsequently be read by the data-transducing head and converted back into digital data.

Magnetic data-storage media may be of the flexible or non-flexible variety. Flexible media, also known as floppy disks, have been used on a widespread basis for many years. Flexible media comprise a flexible substrate (typically MYLAR) covered by an iron-oxide coating. Non-flexible media, also known as hard disks, typically comprise a rigid platter over which an iron-oxide coating is deposited or grown. The platter is typically manufactured from a non-magnetizable material such as aluminum, glass/ceramic, or plastic.

Flexible media, in general, can be produced less expensively than hard disks of comparable data-storage capacity. This cost difference is due to the lower material costs and manufacturing complexity associated with flexible media. Furthermore, flexible media are generally lighter than non-flexible media. Hence, a flexible medium can usually be accelerated to its operational velocity in less time and with less torque than a comparable hard disk.

Data-storage media can also be optical-type media. Optical media store digital data in a manner that is readable by various optical techniques. For example, certain types of compact disks and laser disks contain small elliptical convexities, or pits, disposed along a continuous spiral on the disk. Pitted and non-pitted areas are sequentially disposed along the spiral path in a manner that forms a binary code representing bits of digital data. An optical data-transducing head illuminates a portion of the spiral with a laser beam. Pitted areas scatter most of the beam, while non-pitted areas reflect most of the beam back toward the head. Thus, the intensities of the sequential reflections can be sensed by the head and subsequently converted into digital data.

Data-storage media are further classified as being removable or non-removable (non-removable media are also referred to as fixed media). Removable-media drives usually receive the media through an opening in the front of the drive. Removable media can be installed and removed from the drive with no disassembly of the drive or the media, and with minimal effort on the part of the user. Removable media can thus be replaced by the user on a routine basis. The replacement of fixed media, by contrast, typically requires at least a partial disassembly of the drive. Hence, fixed media are not adapted for routine replacement.

The data-transducing head is typically disposed on some type of actuator mechanism within the disk drive. The actuator mechanism positions the head proximate the particular track to or from which data is being written or read, thereby allowing the head to perform its data-transducing function. Positions from which the head can write or read data are referred to throughout the specification and claims as "data transducing positions."

Disk drives that are adapted for use with hard disks typically fly the data-transducing head above the medium during data-transducing operations. These type of heads are commonly known as flying heads, and have been in widespread use for many years. The actuator mechanism for a flying head usually comprises an actuator arm, a flexure, a suspension arm, a gimbal, and a motor. The data-transducing head is coupled to an end of the flexure via an air-bearing slider. An opposing end of the flexure is affixed to the suspension arm so as to cause the slider and the head to be disposed below the suspension arm. The gimbal is located between the flexure and the slider, and is typically formed as a part of either the flexure or the slider.

The suspension arm is affixed to the actuator arm. The actuator arm is coupled to the body of the disk drive in a manner that facilitates rotational or, alternatively, linear movement of the arm in relation to the data-storage disk. The actuator arm is coupled to the actuator motor. The actuator motor produces a force or a torque that moves the actuator arm. Movement of the actuator arm causes a corresponding movement of the data-transducing head due to the coupling of the head and the actuator arm by way of the suspension arm, the flexure, and the slider. The operation of the actuator motor and, thus, the position of the data-transducing head, are typically regulated by a servo controller.

The data-transducing head and the air-bearing slider are disposed proximate a surface of the data-storage medium when the head is in a data-transducing position. The rotational movement of the disk produces an aerodynamic boundary layer on the surface of the disk. The air-bearing slider is designed to interact with this boundary layer. More particularly, the impingement of the boundary layer on the so-called air-bearing surfaces of the slider generates an aerodynamic force, or lift. The lifting force pushes the slider away from the surface of the data-storage medium. The resilient suspension arm, by way of the gimbal, thereafter exerts a spring force, or gram load, on the slider that counteracts the lifting force. The slider eventually reaches a height above the disk surface at which the counteracting lift and suspension-arm forces are balanced. The distance between the data-transducing head and the adjacent surface of the medium at this point is commonly referred to as the flying height of the slider. Flying heights on the order of one-hundred nanometers or less are common in contemporary data-storage systems.

Low and stable flying heights are highly desirable for a number of reasons. For example, lowering the flying height generally decreases the occurrence of data errors during data-transducing operations. Furthermore, a lower flying height enables the use of shorter spacing between data-bits, thereby increasing the linear density and the overall data-storage capacity of the medium.

Flying a data-transducing head over the data-storage medium provides substantial advantages in relation to sliding or dragging the head across the medium. For example, flying the head over the medium reduces wear on the head and the medium, and thereby improves the life and the durability of both components. Furthermore, the track-following ability of a flying head is usually more favorable than that of a comparable sliding head. Enhanced track-following allows the data tracks to be more closely spaced than would otherwise be feasible. In addition, flying heads commonly operate with lower gram loads than comparable sliding heads. Hence, flying heads typically possess more favorable unloading characteristics than sliding heads.

The use of a flying head in conjunction with a flexible data-storage medium presents substantial difficulties. Hence, flying heads and flexible media are seldom used in combination. In particular, a rotating flexible medium typically experiences surface deflections due to transverse loading, i.e., loading that acts in a direction normal to the medium's plane of rotation. These transverse loads result from a combination of factors such as centrifugal forces generated by the rotational motion of the disk, clamping forces between the medium and the central hub of the disk, and head-medium interactions.

The magnitude of the noted surface deflection varies with both the radial and circumferential positions on the medium. The peak to peak magnitude of the deflections can reach 40,000 micro-inches (approximately 1 mm) on the surface of a 3-1/2-inch floppy disk. The phenomenon of surface deflections on rotating flexible media is addressed in the following article: "Deflection of a Very Flexible Spinning Disk Due to a Stationary Transverse Load," by R.C. Benson and D.B. Bogy, Journal of Applied Mechanics, Vol. 45, September 1978.

The surface deflections experienced by flexible data-storage media inhibit the use of a flying head in conjunction with this type of media. In particular, the use of a flying head presents disadvantages due to the need to avoid contact between the head and the medium. Such contact is commonly referred to as a crash. A crash can result in a loss of data, and can damage the medium, the slider, and the data-transducing head.

The likelihood of a crash is a function of the smoothness of the data-storage medium and the flying height of the data-transducing head. The flying height of the head must be increased where the surface of the data-storage medium is relatively rough. This increase is necessary to avoid contact between the head and the highest points on the medium surface. In the case of a flexible medium, the flying height must be large enough to prevent the head from contacting the peak surface-deflection points on the medium. This requirement necessitates a relatively large average flying height. Thus, the advantages of flying a data-transducing head at a relatively low height are difficult to achieve in conjunction with flexible data-storage media.

Data-storage systems that utilize flexible data-storage media in conjunction with flying heads have been developed. These systems, however, typically include relatively large stabilizers positioned in close proximity to the data-storage medium. This type of arrangement produces substantial amounts of surface drag on the medium and the stabilizer. Surface drag increases the torque and power requirements of the data-storage system. Surface drag also increases the volume and the weight of the structure needed to support the stabilizing elements. These factors drive up the cost, size, weight, and power consumption of the data-storage system. Hence, large stabilizers, in general, present substantial disadvantages light of current consumer demands for light, compact, and inexpensive data-storage systems that consumer minimal amounts of power.

Hence, a long-felt and unfilled need exists for a data-storage system that is capable of exploiting the inherent advantages associated with flexible data-storage media and flying heads, without adding substantially to the size, weight, and torque and power requirements of the system. The present invention is directed to these and other goals.

### Summary of the Invention

An object of the present invention is to provide a data-storage system having a stabilizing member that facilitates the use of a flying head in conjunction with a flexible data-storage medium. In accordance with this object, a presently-preferred embodiment of the invention provides a data-storage system for use with a flexible data-storage medium having a data-storage surface and an opposing second surface. The data-storage system comprises a data-transducing head. The data-storage system also includes an air-bearing slider mechanically coupled to the data-transducing head for flying the data-transducing head proximate the data-storage surface.

The data-storage system further comprises a stabilizing member. The stabilizing member has a medium-confronting surface positioned adjacent the second surface of the data-storage medium. In addition, the medium-confronting surface is substantially aligned with the data-transducing head so that at least a portion of the data-storage medium is disposed between the stabilizing member and the data-transducing head.

The data-storage system may include an actuator mechanism mechanically coupled to the stabilizing member. The actuator mechanism positions the medium-confronting surface adjacent the second surface of the data-storage medium so that the medium-confronting surface is substantially aligned with the data-transducing head and at least a portion of the data-storage medium is disposed between the stabilizing member and the data-transducing head.

In accordance with the above-noted object, another preferred embodiment of the invention provides a data-storage system for use with a flexible data-storage medium having a first data-storage surface and an opposing second data-storage surface. The data-storage system comprises a first data-transducing head and a first stabilizing member mechanically coupled to the first data-transducing head. The data-storage system also comprises a first air-bearing slider mechanically coupled to the first data-transducing head and the first stabilizing member for flying the first data-transducing head proximate the first data-storage surface.

The data-storage system also includes a second data-transducing head and a second stabilizing member mechanically coupled to the second data-transducing head. The data-storage system further comprises a second air-bearing slider mechanically coupled to the second data-transducing head and the second stabilizing member for flying the second data-transducing head proximate the second data-storage surface.

The first stabilizing member of the data-storage system is positioned adjacent the first data-storage surface, and the second stabilizing member is positioned adjacent the second data-storage surface so that the first and the second stabilizing members are substantially aligned and at least a potion of the data-storage medium is disposed between the first and the second stabilizing members.

A further object of the present invention is to provide a method for flying a data-transducing head and an air-bearing slider proximate a surface of a flexible data-storage medium. In accordance with this object, a preferred method for flying a data-transducing head and an air-bearing slider proximate a first surface of a flexible data-storage medium comprises the steps of rotating the data-storage medium and placing the data-transducing head and the air-bearing slider in proximity to the medium first surface. The method also includes the step of positioning a stabilizing member adjacent a second surface of the data-storage medium so that the stabilizing member is substantially aligned with the data-transducing head and at least a portion of the data-storage medium is disposed between the data-transducing head and the stabilizing member.

### Brief Description of the Drawings

The foregoing summary, as well as the following detailed description of the preferred embodiment, is better understood when read in conjunction with the appended drawings. For the purpose of illustrating the invention, the drawings show an embodiment that is presently preferred. The invention is not limited, however, to the specific instrumentalities disclosed in the drawings. In the drawings:
Fig. 1 is a top view of a disk drive in accordance with the present invention;
Fig. 2 is a diagrammatic side view of a stabilizing member, a data-transducing head, and actuator mechanisms for the stabilizing member and the data-transducing head of the disk drive shown in Fig. 1;
Fig. 3 is a block diagram illustrating selected components of the disk drive shown in Fig. 1;
Fig. 4 is a top perspective view of the stabilizing member shown in Fig. 2;
Fig. 5 is a bottom view of the stabilizing member shown in Fig. 2;
Fig. 6 is a side view of the stabilizing member shown in Fig. 2;
Fig. 7 is top perspective view of an alternative embodiment of the stabilizing member shown in Fig. 2;
Fig. 8 is a bottom view of the alternative embodiment shown in Fig. 7;
Fig. 9 is a side view of the alternative embodiment shown in Fig. 7;
Fig. 10 is a top perspective view of an alternative embodiment of the stabilizing member shown in Fig. 2;

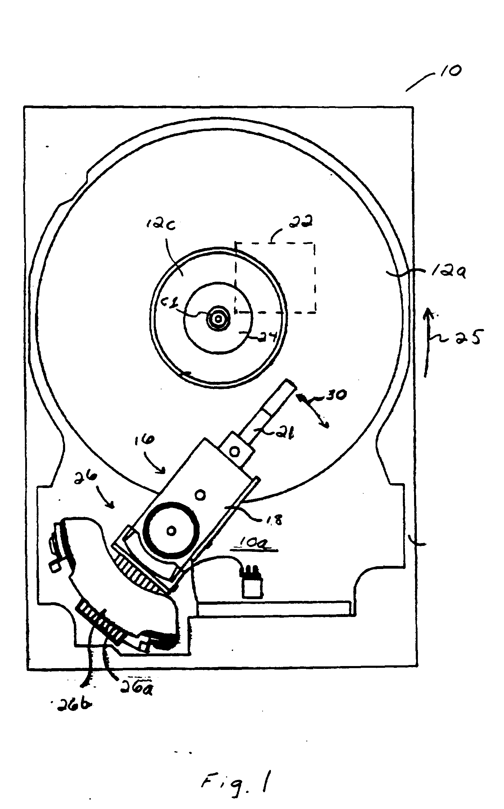

Fig. 1 is a bottom view of the alternative embodiment shown in Fig. 10;
Fig. 12 is a side view of the alternative embodiment shown in Fig. 10; and

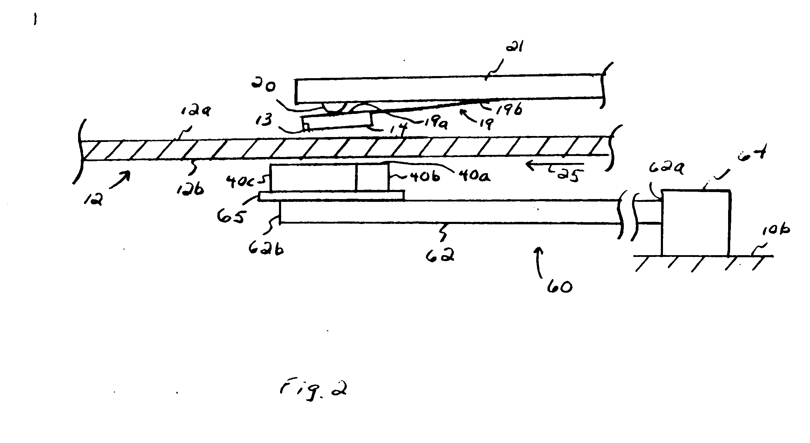

Fig. 13 is a side view of an alternative embodiment of the stabilizing member and the actuator mechanisms shown in Fig. 2.

### Description of the Preferred Embodiments

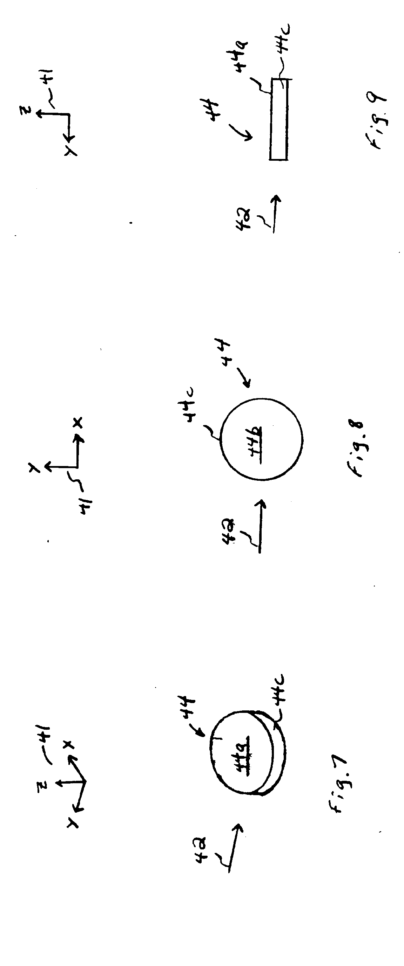

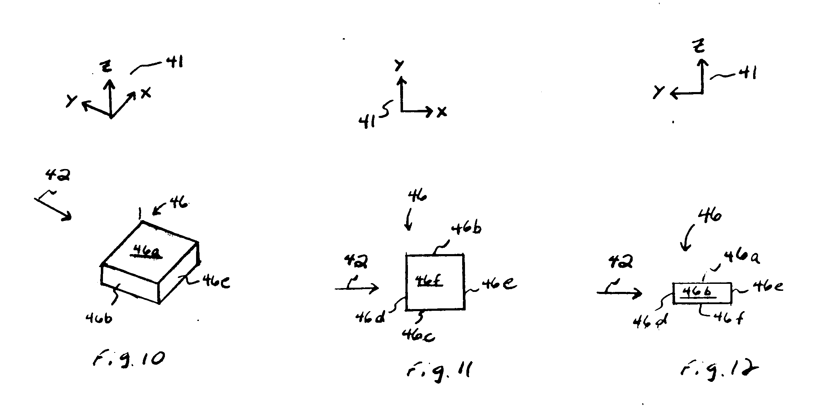

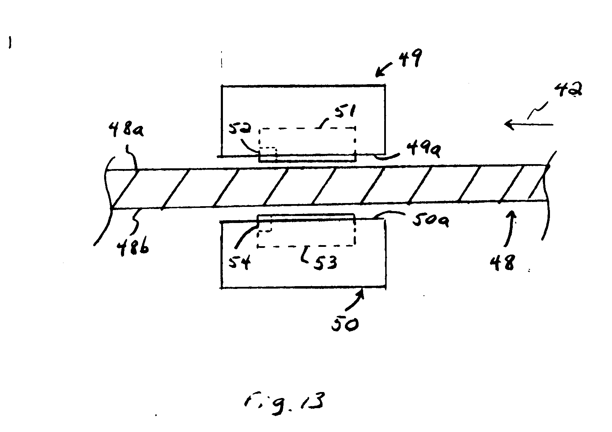

The present invention is directed to a data-storage system having a media-stabilizing member. A presently-preferred embodiment of the invention is illustrated in Figures 1 through 12. The preferred embodiment described herein comprises a disk drive 10. This particular data-storage system is described for exemplary purposes only. Accordingly, the invention is not limited to the exemplary embodiment, as the invention can be applied to other types of data-storage systems.

The disk drive 10 is most clearly illustrated in Figure 1. The disk drive 10 is adapted for use with a rotatable data-storage medium 12. The data-storage medium 12 has a first surface 12a, an opposing second surface 12b, and a hub 12c. These features are best shown in Figures 1 and 2. The disk drive 10 utilizes a flexible, non-removable, magnetic-type medium 12. The invention is equally applicable to removable media. Furthermore, the invention can be used in conjunction with optical as well as magnetic media.

The disk drive 10 comprises a data-transducing head 13 (see Figure 2). The data-transducing head 13 is a magnetoresistive read/write head. This particular type of data-transducing head 13 is described for exemplary purposes only, as invention can readily be used in conjunction with other types of read/write and read-only heads.

The data-transducing head 13 is affixed to an air-bearing slider 14. The head 13 may be bonded to a surface of the slider 14. Alternatively, the head 13 can be integrally formed in the slider 14. The air-bearing slider 14 is mechanically coupled to an actuator mechanism 16.

The actuator mechanism 16 comprises an actuator arm 18, a flexure 19, a gimbal 20, and a suspension arm 21 (see Figures 1 and 2). The slider 14 is affixed to a first end 19a of the flexure 19. An opposing end 19b of the flexure 19 is affixed to the suspension arm 21. The slider 14 and the head 13 are thereby suspended from the flexure 19 below the arm 21. The gimbal 20 is affixed to the suspension arm 21 directly above the end 19a of the flexure 19. The suspension arm 21 is affixed to the actuator arm 18. The actuator arm 18 is pivotally coupled to an internal surface 10a of the disk drive 10.

The disk drive 10 comprises one data-transducing head 13, and is adapted for operation with one data-storage medium 12 at one time. (The invention is equally applicable to drives 10 that are capable of operating with multiple data-transducing heads 13 and multiple data-storage media 12.)

The disk drive 10 comprises a spindle motor 22 that rotates the data-storage medium 12 (the spindle motor 22 is shown in phantom in Figure 1). The drive 10 also includes a spindle 24 through which the rotational torque of the spindle motor is transmitted to the medium 12. The medium 12 rotates about a central axis C1, in the direction denoted by the arrow 25. The plane of rotation of the medium 12 is substantially parallel to the surfaces 12a and 12b.

The slider 14 is positioned proximate the first surface 12a of the medium 12 during data-transducing operations within the drive 10. The data-transducing head 13 writes and reads digital information to and from the surface 12a when the head 13 is so positioned. More particularly, the head 13 writes and reads digital information to and from a series of concentric tracks (not shown) disposed along the surface 12a.

The rotation of the medium 12 produces an aerodynamic boundary layer on the surface 12a. The slider 14 interacts aerodynamically with this boundary layer. More particularly, the impingement of the boundary layer on the slider 14 generates a lifting force. This force pushes the slider 14 away from the surface 12a. The lifting force drives the slider 14 into contact with the gimbal 20. The resilient suspension arm 21, by way of the gimbal 20, thereafter exerts a spring force on the slider 14. The spring force counteracts the lifting force. The slider 14 eventually reaches a height above the surface 12a at which the counteracting lift and suspension-arm forces are balanced. This height represents the flying height of the head 13.

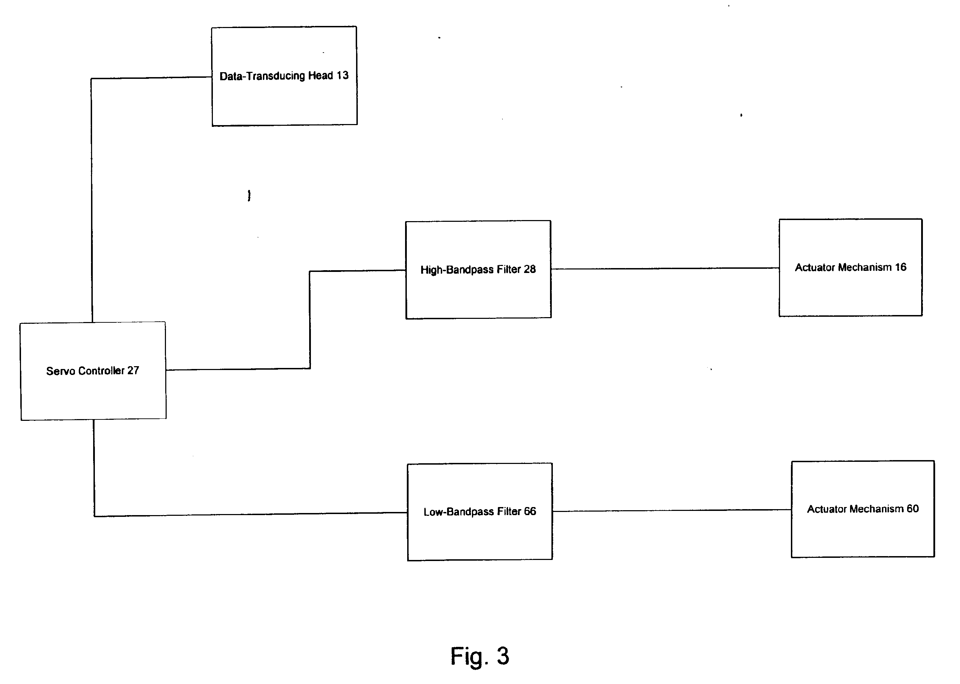

The actuator 16 further comprises an actuator motor 26 (see Figure 1). The actuator motor 26 is a voice-coil motor comprising a movable coil 26a and a fixed permanent-magnet assembly 26b. The coil 26a is pivotally disposed within the magnetic field produced by the assembly 26b. The coil 26a is mechanically coupled to the actuator arm 18. The coil 26a is electrically coupled to a servo controller 27 by way of a high-bandpass filter 28, as shown in Figure 3. (The significance of the filter 28 is explained below.)

The servo controller 27 selectively directs electrical current to the motor 26 to position the head 13 in a desired location relative to the medium 12. In particular, the servo controller 27 directs current through the coil 26a. The flow of current through the coil 26a drives the coil 26a through the magnetic field created by the assembly 26b. This movement, in conjunction with the pivotal mounting arrangement of the coil 26a, causes the coil 26a (and the motor 26) to generate a torque output. (The invention can also be utilized in conjunction with actuator motors that produce an output in the form of a linear force.)

The torque output of the motor 26 causes the actuator arm 18 to rotate about the pivot point of the coil 26a. This motion causes the suspension arm 21 to translate along an arcuate path. The corresponding movement of the arm 21 and the data-transducing head 13, in turn, causes the head 13 to translate along an arcuate path 30 in relation to the surface 12a of the data-storage medium 12 (see Figure 1). (Although the drive 10 is described herein as comprising a voice-coil motor and a pivoting actuator arm 18, the invention is equally applicable to drives 10 that utilize a stepper motor or a linearly-translating actuator arm.)

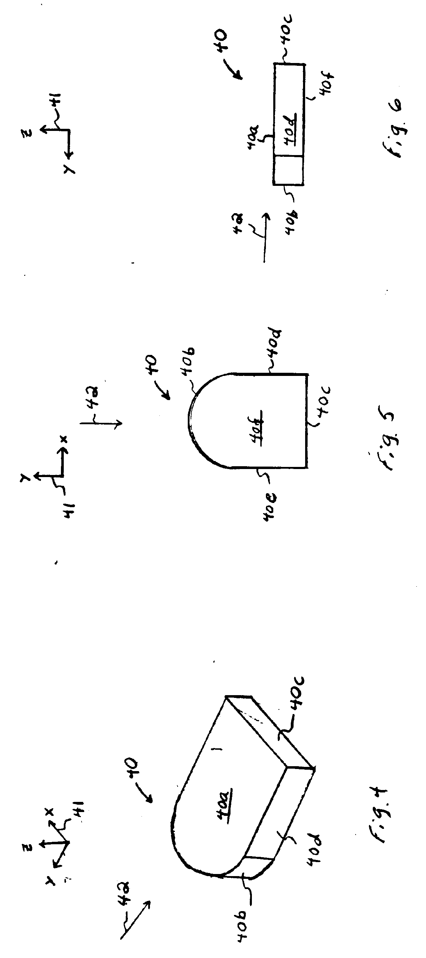

The disk drive 10 further comprises a stabilizing member 40. The stabilizing member 40 has the relatively compact profile shown in detail in Figures 4 through 6. (Figures 4 through 6 are each referenced to a common coordinate system 41 denoted in each illustration.)

The stabilizing member 40 includes a substantially planar medium-confronting surface 40a. The medium-confronting surface 40a is positioned adjacent the second surface 12b of the medium 12 during data-transducing operations, as explained in detail below. Furthermore, at least a portion of the stabilizing member 40 is substantially aligned with the data-transducing head 13, i.e., the stabilizing member 40 and the head 13 share a common position in relation to the axis of rotation Cl of the medium 12. Hence, a portion of the medium 12 is disposed between the stabilizing member 40 and the head 13. This arrangement stabilizes, i.e., limits the deflection of, the medium 12 proximate the data-transducing head 13, thereby allowing the head 13 to fly above (or below) the surface 12a of the medium 12 without substantially contacting the surface 12a.

Structural details of the stabilizing member 40 are as follows. The stabilizing member 40 includes a leading edge 40b and a trailing edge 40c. The stabilizing member 40 also has a first side edge 40d and a second side edge 40e. The side edges 40d and 40e each adjoin the leading edge 40b and the trailing edge 40c. The stabilizing member 40 also includes a back surface 40f that opposes the medium-confronting surface 40a. The medium-confronting surface 40a and the back surface 40f each adjoin the edges 40b through 40e. The surfaces 40a and 40f are substantially planar in the exemplary embodiment. Preferably, the medium-confronting surface 40a is polished so as to blend the junctions between the surface 40a and the edges 40b through 40e.

The leading edge 40b has a substantially curvilinear profile. Preferably, the leading edge 40b spans an arc of about 180 degrees. The trailing edge 40c and the side edges 40d and 40e are substantially straight. The side edges 40d and 40e are approximately equal in length (y dimension), and are substantially parallel. Hence, the leading edge 40b has a radius of curvature R1 about equal to one-half of the length (x dimension) of the trailing edge 40c. Preferably, the length of the trailing edge 40c is about equal to the length of the side edges 40d and 40e. This geometric configuration gives the stabilizing member 40 a substantially D-shaped profile, as is best shown in Figure 5. More particularly, the noted geometry gives both the medium-confronting surface 40a and the back surface 40f a D-shape.

The side edges 40d and 40e and the trailing edge 40c each have a preferred length of approximately ten mm when the stabilizing member 40 is used in conjunction with a nano (seventy-percent) slider. A preferred length of the edges 40c, 40d, and 40e is approximately eight mm when the stabilizing member 40 is used in conjunction with a micro (fifty-percent) slider. The edges 40c, 40d, and 40e each have a preferred length within the range of approximately six mm to seven mm when the stabilizing member 40 is used in conjunction with a pico (thirty-percent) slider. A preferred length of the side edges 40c, 40d, and 40e is approximately five mm or less when the stabilizing member 40 is used in conjunction with a femto (twenty-percent) slider. (The noted dimensions are presented for exemplary purposes only. The preferred dimensions of the stabilizing member 40 will vary substantially with factors such as the required size of the stabilized area on the medium 12, the diameter and the rotational speed of the data-storage medium 12, etc.)

Functional details of the stabilizing member 40 are as follows. The medium-confronting surface 40a of the stabilizing member 40 is positioned adjacent the medium surface 12b during data-transducing operations, as shown in Figure 2. (For clarity, the spacing between the surfaces 12b and 40a, and the spacing between the head 13 and the surface 12a is exaggerated in Figure 2.) Preferably, the spacing between the medium-confronting surface 40a and the medium surface 12b is within the range of approximately 0 to 50 microns when the medium 12 is not rotating. (These values are presented for illustrative purposes only; the optimal spacing between the surfaces 12b and 40a is dependent upon on various factors such as the rotational speed of the medium 12, the dimensions of the medium-confronting surface 40a, etc.)

The medium-confronting surface 40a interacts with the aerodynamic boundary layer that forms on the surface 12b due to the rotational movement of the medium 12. (The approximate direction of movement of the boundary layer in relation to the surface 40a is denoted by the arrow 42 shown in the figures.) In particular, entrainment of the boundary layer between the medium surface 12b and the medium-confronting surface 40a produces a stiffening effect on the portion of the medium 12 adjacent the surface 40a. This stiffening effect stabilizes the medium 12, i.e., the increase in stiffness substantially reduces the previously-described steady-state surface deflections that occur during rotation of the medium 12. Furthermore, the entrained layer of air exerts a dampening effect on the medium 12, and thereby further reduces the noted surface deflections.

The stiffening and dampening effects of the stabilizing member 40 limit the surface deflections on the medium 12 to levels that allow the data-transducing head 13 to operate at a relatively low flying height. In particular, the head 13 operates at a flying height within the range of approximately 25 nanometers to 50 nanometers without substantially contacting the medium surface 12a. Flying heights in this range facilitate the use of the head 13 with contemporary high-linear-density flexible media such as the medium 10.

The stabilizing member 40 provides a favorable balance between low drag and large stabilized area. More specifically, the D-shape of the medium-confronting surface 40a causes the stabilizing member 40 to generate a relatively low amount of drag when interacting with the boundary layer generated by the medium surface 12b. Minimal drag is desirable because drag increases the volume and the weight of the structure needed to support the stabilizing member 40; drag also increases the size and power requirements of the spindle motor 22.

Furthermore, the D-shape of the stabilizing member 40 provides a relatively large stabilized area on the medium surface 12a. A maximal stabilized area is desirable because increases in stabilized area decrease the potential for inadvertent contact between the data-transducing head 13 and the medium surface 12a. A maximal stabilized area also decreases the actuation requirements for the stabilizing member 40. In particular, a maximal stabilized area decreases the degree of precision with which the stabilizing member must follow the head 13 in order to provide a stabilized area directly under (or over) the head 13. A maximal stabilized area also allows the use of less precise manufacturing tolerances for the stabilizing member 40 and its actuating and support hardware.

The stabilized area and the amount of drag produced by the stabilizing member 40 are affected by the profile of the medium-confronting surface 40a. In particular, the drag generated by the stabilizing member 40 can be reduced by forming the medium-confronting surface 40a with a curvilinear or arcuate profile, i.e., with a cross-section that has a convex profile in relation to the y axis (this particular configuration, however, reduces the stabilized area on the medium 12).

The D-shaped stabilizing member 40 has been described for exemplary purposes only. Stabilizing members having other geometric profiles are also within the contemplated scope of the invention. For example, a stabilizing member 44 having a substantially circular shape is shown in Figures 7 through 9. The circular stabilizing member has a medium-confronting surface 44a and an opposing back surface 44b. A substantially circular side edge 44c adjoins the medium-confronting surface 44a and the back surface 44b.

The circular profile of the stabilizing member 44 causes the stabilizing member 44 to generate a lower amount of drag than the D-shaped stabilizing member 40 under comparable operating conditions. In addition, the circular stabilizing member 44 is relatively easy to manufacture. The circular stabilizing member 44, however, provides a smaller stabilized area on the medium surface 12a than does the stabilizing member 40.

A stabilizing member 46 having a substantially square profile is shown in Figures 10 through 12. The square stabilizing member 46 includes a medium-confronting surface 46a, a first side edge 46b, and an opposing second side edge 46c. The member 46 also includes a forward edge 46d and an opposing trailing edge 46e. The edges 46d and 46e each adjoin the side edges 46b and 46c. The edges 46b through 46e adjoin the medium-confronting surface 46a. The edges 46b through 46e are substantially planar, and have substantially similar dimensions. The stabilizing member 46 also includes a back surface 46f that opposes the medium-confronting surface 46a.

An embodiment of the invention that is suitable for use, with a double-sided data-storage medium 48 is shown in Figure 13. The data-storage medium 48 has a first data-storage surface 48a and an opposing second data-storage surface 48b. The embodiment shown in Figure 13 comprises a first stabilizing member 49 and a substantially identical second stabilizing member 50. The stabilizing member 49 includes a medium-confronting surface 49a. An air-bearing slider 51 and a data-transducing head 52 are integrated into the stabilizing member 49. The stabilizing member 50 includes a medium-confronting surface 50a. An air-bearing slider 53 and a data-transducing head 54 are integrated into the stabilizing member 50.

The stabilizing members 49 and 50 are positioned adjacent the data-storage surfaces 48a and 48b, respectively, during data-transducing operations. This arrangement causes a portion of the medium 48 to be disposed between the stabilizing members 49 and 50. The stabilizing surfaces 49a and 50a stabilize the portion of the medium 48 disposed between the stabilizing members 49 and 50, while the heads 52 and 54 write or read data to and from the medium surfaces 48a and 48b.

Details concerning the suspension and actuation of the stabilizing member 40 follow. The stabilizing member 40 may be suspended and actuated in various ways. For example, the stabilizing member 40 can be mounted on an actuator mechanism 60, as shown in Figure 2. The actuator mechanism 60 includes a semi-rigid actuator arm 62 and a voice-coil motor 64. (Alternative embodiments may utilize other types of actuating means in lieu of voice-coil motor 64, e.g., a stepper motor or a ball-screw actuator.) The motor 64 is mounted on an internal surface lOb of the disk drive 10, below the actuator mechanism 16 (the actuator mechanism 60 and the actuator mechanism 16 are mechanically independent in this particular embodiment).

A first end 62a of the actuator arm 62 is fixedly coupled to the motor 64. A second end 62b of the actuator arm 62 is fixedly coupled to the back surface 40f of the stabilizing member 40 by way of a mounting plate 65. (The actuator arm 62 may be coupled to other. surfaces of the stabilizing member 40, e.g., edges 40b, 40c, 40d, or 40e, in alternative embodiments of the invention.)

The motor 64 is electrically coupled to the servo controller 27 by way of a low-bandpass filter 66 (see Figure 3). The servo controller 27 selectively directs electrical current to the motor 64, thereby activating the motor 64. The motor 64 rotates the actuator arm 62, and thus moves the stabilizing member 40 over an arcuate path proximate the medium surface 12b. The actuator arm 62 is sized so that the path of the stabilizing member 40 is substantially aligned with the path 30 of the data-transducing head 13.

The actuator mechanism 60 is controlled by the output of the servo controller 27. The use of the low-bandpass filter 66 allows. the control output for the actuator mechanism 16 to be utilized for the actuator mechanism 60. In particular, use of the filter 66 lowers the number of corrections implemented by the actuator mechanism 60 to the position of the stabilizing member 40. This arrangement is preferable because the positions of the stabilizing member 40 and the data-transducing head 13 do not need to be controlled with the same degree of precision. Specifically, the position of the head 13 must be controlled with a relatively high degree of precision in order for the head 13 to follow the data tracks on the medium surface 12a. The position of the stabilizing member 40, by contrast, does not need to be controlled with the same degree of precision in order to maintain the stabilizing member 40 in alignment with the head 13. The use of the low-bandpass filter 66 and the high-bandpass filter 28 allows the positions of the stabilizing member 40 and the data-transducing head 13 to be controlled with these differing degrees of precision based on a common control input.

The above-described arrangement for suspending and actuating the stabilizing member 40 is presented for exemplary purposes only. Other arrangements are also within the contemplated scope of the invention. For example, the actuator mechanism 16 can be mechanically coupled to the actuator mechanism 60 in a manner that allows large position corrections for the head 13 to be implemented by the actuator mechanism 60, and relatively small head-position corrections to be implemented by the actuator mechanism 16. Alternatively, the stabilizing member 40 can be mechanically coupled to the actuator mechanism 16, thereby facilitating the use of a single actuator mechanism 16 to control the positions of the stabilizing member 40 and the head 13. The choice of a particular mounting and actuation configuration involves trade-offs between, for example, cost, complexity, and the degree of precision with which the positions of the head 13 and the stabilizing member 40 are to be controlled.

The present invention provides substantial advantages in relation to commonly-used data-storage systems. For example, the invention facilitates the use of flexible data-storage media such as the medium 10 in conjunction with flying heads such as the head 13. In particular, the invention stabilizes the medium 10 to an extent that allows the data-transducing head 13 to operate at the low flying heights necessary for the head 13 to interface with contemporary high-linear-density media such as the medium 10.

The invention thus provides the advantages associated with flexible data-storage media and flying heads. Specifically, flexible media are typically less expensive than hard media. In addition, flexible media typically require less spin-up torque than comparable hard media. Hence, the power requirements for a flexible-media system are typically lower than those of a hard-media system. Furthermore, a flying-head typically experiences less wear than a comparable sliding head, and flying heads usually produce less media wear than sliding heads. Hence, the use of a flying head provides advantages related to head and media durability. Additionally, a flying head is usually able to follow the data tracks on a data-storage medium with greater accuracy than a comparable sliding head. The flying head therefore allows closer track spacing which, in turn, increases the medium's data-storage capacity.

Furthermore, the stabilizing member 40 stabilizes the medium 10 in the above-noted manner while producing minimal amounts of drag in comparison to other media-stabilizing devices. This benefit stems from the relatively compact profile of the stabilizing member 40. Hence, the stabilizing member 40 adds minimally to the torque and power requirements of the disk drive 10. Additionally, the weight and the volume of the structure needed to support the stabilizing member 40 are minimal. Thus, the use of the stabilizing member 40 does not substantially affect the overall size, weight, and power requirements of the disk drive 10.

It is to be understood that even though numerous characteristics and advantages of the present invention have been set forth in the foregoing description, together with details of the structure and function of the invention, the disclosure is illustrative only, and changes may be made in detail, especially in matters of shape, size, and arrangement of the parts, within the principles of the invention to the full extent indicated by the broad general meaning of the terms in which the appended claims are expressed.

## Claims

1. A data-storage system (10) for use with a flexible data-storage medium (12) having a data-storage surface (12a) and an opposing second surface (12b), comprising:
- a data-transducing head (13);
- an air-bearing slider (14) mechanically coupled to the data-transducing head for flying the data-transducing head proximate the data-storage surface; and
- a stabilizing member (40) having a medium-confronting surface, the medium-confronting surface (40a) being (i) positioned adjacent the second surface (12b) of the data-storage medium and (ii) substantially aligned with the data-transducing head so that at least a portion of the data-storage medium is disposed between the stabilizing member and the data-transducing head.

2. The data-storage system of claim 1, wherein the medium-confronting surface is substantially D-shaped.

3. The data-storage system of claim 1, wherein the medium-confronting surface is substantially circular.

4. The data-storage system of claim 1, wherein the medium-confronting surface is substantially square.

5. The data-storage system of one of claims 1 to 4, wherein the medium-confronting surface is substantially planar.

6. The data-storage system of claim 2, wherein the stabilizing member further includes:
- a substantially straight first side edge (40d) adjoining the medium-confronting surface (40a);
- a substantially straight second side edge (40e) adjoining the medium-confronting surface and opposing the first side edge;
- a substantially circular forward edge (40b) adjoining the first and the second side edges and the medium-confronting surface;
- a substantially straight trailing edge adjoining the first and the second side edges and the medium-confronting surface and opposing the forward edge; and
- a back surface (i) adjoining the first and the second side edges, the forward edge, and the trailing edge and (ii) opposing the medium-confronting surface.

7. The data-storage system of claim 6, wherein the first side edge, the second side edge, and the trailing edge are substantially equal in length.

8. The data-storage system of claim 3, wherein the stabilizing member (44) further includes (i) a substantially circular side edge (44c) adjoining the medium-confronting surface and (ii) a back surface (44b) adjoining the side edge and opposing the medium-confronting surface.

9. The data-storage system of claim 4, wherein the stabilizing member (46) further includes:
- a substantially straight first side edge (46b) adjoining the medium-confronting surface;
- a substantially straight second side edge (46c) adjoining the medium-confronting surface and opposing the first side edge;
- a substantially straight forward edge (46d) adjoining the first and the second side edges and the medium-confronting surface;
- a substantially straight trailing edge (46e) adjoining the first and the second side edges and the medium-confronting surface and opposing the forward edge; and
- a back surface (i) adjoining the first and the second side edges, the forward edge, and the trailing edge and (ii) opposing the medium-confronting surface.

10. The data-storage system of one of claims 1 to 9, further comprising:
- a spindle motor (22) for rotating the data-storage medium; and
- a first actuator mechanism (16) including (i) a first actuator arm (18) mechanically coupled to the air-bearing slider for positioning the data-transducing head (13) and the air-bearing slider proximate the data-storage surface of the medium, and (ii) a first actuator motor mechanically coupled to the first actuator arm.

11. The data-storage system of claim 10, further comprising a second actuator mechanism (60) having (i) a second actuator arm (62) mechanically coupled to the stabilizing member for positioning the stabilizing member adjacent the second surface of the data-storage medium, and (ii) a second actuator motor (64) mechanically coupled to the second actuator arm.

12. The data-storage system of claim 11, wherein the first and the second actuator mechanisms are mechanically independent.

13. The data-storage system of claim 11 or 12, wherein the first and the second actuator motors are voice-coil motors.

14. The data-storage system of claim 11, 12 or 13, wherein the first and the second actuator arms are rotatably translatable.

15. The data-storage system of one of claims 11 to 14, further comprising a servo controller (27) electrically coupled to the first and the second actuator mechanisms for controlling movement of the data-transducing head and the stabilizing member so that the stabilizing member remains substantially aligned with the data-transducing head.

16. The data-storage system of claim 15, further comprising:
- a high-bandpass filter (28) electrically coupled the servo controller and the first actuator mechanism; and
- a low-bandpass filter (66) electrically coupled the servo controller and the second actuator mechanism.

17. The data-storage system of claim 1, wherein the data-transducing head is a magnetoresistive read/write head.

18. A data-storage system (10) for use with a flexible data-storage medium (12) having a data-storage surface (12a) and an opposing second surface (12b), comprising:
- a data-transducing head (13);
- an air-bearing slider (14) mechanically coupled to the data-transducing head for flying the data-transducing head proximate the data-storage surface; and
- a stabilizing member (40) having a medium-confronting surface (40a);
- an actuator mechanism (60)mechanically coupled to the stabilizing member for positioning the medium-confronting surface adjacent the second surface of the data-storage medium so that (i) the medium-confronting surface is substantially aligned with the data-transducing head and (ii) at least a portion of the data-storage medium is disposed between the stabilizing member and the data-transducing head.

19. A data-storage system (10) for use with a flexible data-storage medium (48) having a first data-storage surface (48a) and an opposing second data-storage surface (48b), comprising:
- a first data-transducing head (52);
- a first stabilizing member (49) mechanically coupled to the first data-transducing head;
- a first air-bearing slider (51) mechanically coupled to the first data-transducing head and the first stabilizing member for flying the first data-transducing head proximate the first data-storage surface;
- a second data-transducing head (54);
- a second stabilizing member (50) mechanically coupled to the second data-transducing head; and
- a second air-bearing slider (53) mechanically coupled to the second data-transducing head and the second stabilizing member for flying the second data-transducing head proximate the second data-storage surface,
wherein the first stabilizing member is positioned adjacent the first data-storage surface and the second stabilizing member is positioned adjacent the second data-storage surface so that (i) the first and the second stabilizing members are substantially aligned and (ii) at least a potion of the data-storage medium is disposed between the first and the second stabilizing members.

20. A method for flying a data-transducing head (13) and an air-bearing slider (40) proximate a first surface (12a) of a flexible data-storage medium (12), comprising the steps of:
- rotating the data-storage medium;
- positioning the data-transducing head and the air-bearing slider proximate the first surface of the data-storage medium; and
- positioning a stabilizing member (40) adjacent a second surface of the data-storage medium so that (i) the stabilizing member is substantially aligned with the data-transducing head and (ii) at least a portion of the data-storage medium is disposed between the data-transducing head and the stabilizing member.
